# EUROPEAN PATENT APPLICATION

(11) **EP 2 721 928 A1**
(43) Date of publication of application: **23.04.2014**
(21) Application number: 13188606.1
(22) Date of filing: 14.10.2013
(51) Int. Cl.: A01M 1/14, A01M 1/02

(54) **Trap for insects**

(30) Priority: 16.10.2012 ES 201231062 U
(71) Applicant: Zyxtudio diseño e innovación SL, 46003 Valencia (ES)
(72) Inventor: Blasco Feo, Vicente, 46003 Valencia (ES)
(74) Representative: Soler Lerma, Santiago

(57) **Abstract**

TRAP FOR INSECTS of the type which uses an attracting product and an adhesive substance in such a manner that the insect is attracted to a receptacle and becomes trapped and dies attached, characterised in that it comprises a lamina body, with one of its faces partially coated with a material having attracting and adhesive qualities, a removable cover that protects the area covered by the material, a covered zone with adhesive material, a removable cover that protects the area coated with adhesive material, at least one protruding tab on one of the ends of the lamina body and at least one cutout on the opposite side.

## Description

The present invention, as its name indicates, refers to a trap for insects of the type that uses and attracting product in such a way that the insect is attracted towards a receptacle in which it is trapped, in this case by an adhesive substance, so that the insect dies adhered and remains adhered inside the receptacle after dying.

The sector of the art to which it pertains is that of traps for insects.

### BACKGROUND OF THE INVENTION

The use of traps for insects which work on the base of attracting insects due to the action of an attracting product, such as a pheromone, to direct them towards a receptacle in which they are trapped and die, is commonplace.

The type that produces the attraction of the insects by means of attracting substances such as pheromones is known in the art.

ES1032005U "Field trap catches insects" This refers to a recipient covered by a superimposed body, inside of which a screen bearing a pheromone can be lodged.

CHP89810585.3 "trap for insects, especially food moths", has a structure made of vertical strips with relation to a large side that has a layer of glue over a transparent bottom. It is attached hanging.

ESP8701797 "A trap for insects" comprises a conical wrapping that has a wall stretching towards the bottom and inside, and an erect annular ridge over which some deflectors perpendicular to it are located, preferable four fins, which are located over a ring. It has lures for insects which, when they collide with the deflectors, fall into a bottom receptacle for insects consisting in a bag.

ESU9100726 "Device for catching flies" is formed by a recipient with a top locking plug having an interior orifice that is prolonged interiorly, which defines a container recipient of a hydrolysed protein liquid, and equipped with a support in the form of a blade for an attracting product.

On occasions there has been an interest in simplifying the receptacles by eliminating the walls, so that the dispersal of the attracting substances is fomented.

In this case, in order to prevent the insect from shunning the trap, adhesive substances are used that coat the surfaces on which the insect remains stuck when landing on them.

### DESCRIPTION OF THE INVENTION

The invention proposed herein is a free standing trap that comprises a receptacle, an attracting substance and an adhesive substance, means for being fixed on a horizontal or vertical surface, all this being on a simplified and disposable structure.

The disposable trap proposed herein posses a structure made on a lamina of stiff material such as cardboard, on which some lines and cuts have been defined for guiding and facilitating folding.

One of the faces of the aforesaid sheet is left at least partially coated by a material that comprises adhesive and attracting quality for insects, which hereinafter will be called the "material".

The area coated by the aforesaid material is left during transport and until the use of the trap, covered by a coating that keeps the material from losing qualities and being spent.

In an area close to the edges of the sheet, or at least to one of them, there is a band of an adhesive substance, which hereinafter will be called the "adhesive", and which likewise is covered during transport of the device.

One of the sides of the sheet has one or more protruding tabs having a size, shape and position coinciding with one or several cutouts made in the opposite size.

To put the device into use the covers must be removed, both from the material and the adhesive, and the edges of the lamina forming a body having a triangular profile, with the material remaining on the inside face.

The cutouts leave the adhesive partially uncovered so that the devices can remain adhered to a vertical surface.

In situations where the option of adhering the devices to a vertical surface is not going to be used, the exposed area of the adhesive may be covered by folding the flaps over on themselves.

With the device configured in said manner, a body remains having a triangular profile inside of which there is a material having adhesive and attracting qualities for insects, in such a way that the insect, on feeling attracted, will enter into the device and become trapped by the material coating the interior.

### BRIEF EXPLANATION OF THE FIGURES

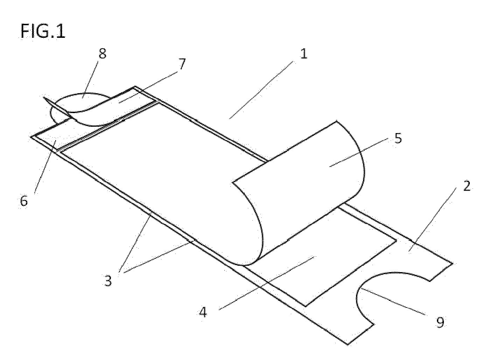

FIGURE 1 displays device (1) and its components such that lamina (2), which constitutes its structure, can be seen having folding lines (3), material having adhesive and attracting qualities (4), and its cover (5), adhesive (6) and its cover (7), protruding flap (8) of one of its edges and cutout (9) on the opposite side.

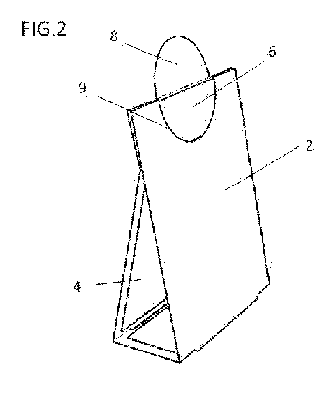

FIGURE 2 displays the device mounted for it used, showing that material (4) is left visible inside the device, the two edges of lamina (2) are joined by adhesive (6) a portion of which is left visible through cutout (9), while flap (8) protrudes from the assembly to the point, in this case, of being folded over the cutout covering the adhesive that is in view.

### DESCRIPTION OF A PREFERRED EMBODIMENT OF THE INVENTION

The following explanation of an embodiment of the invention that is not unique, but rather explanatory, with different forms being possible.

The disposable trap device comprises:
- A lamina body (1) having some folding lines (3)
- Material (4) with adhesive and insect attracting qualities on one of the faces of the lamina body.
- A removable cover (5) that covers the material.
- On an edge of the lamina body and on the same face as the material, there is a strip covered with adhesive 6) and, at the same time, covered with a removable cover (7).
- A tab (8) protruding on the edge of the lamina body on which the band with adhesive is located.
- A cutout (9) on the end opposite the end on which the tab is located.

After removing the covers of both the material and the adhesive, the lamina body is folded along folding lines (3) joining their ends, which remain glued by the action of adhesive (6).

In an area of cutout (9) adhesive (6) remains visible, it being possible to fix the device on a vertical surface.

## Claims

1. TRAP FOR INSECTS, of the type that comprises a receptacle, material with attracting qualities, such as may be a pheromone, and an adhesive material, **characterised in that** it comprises:
• A lamina body (1), one of its faces being partially coated with a material (4) with attracting and adhesive qualities.
• A removable cover (5) that protects a coated area for the material with attracting and adhesive qualities.
• A coated area with adhesive material (6).
• A removable cover that protects with coated area with adhesive material.
• At least one protruding tab on one of the ends of the lamina body and at least one tab on its other end.

2. TRAP FOR INSECTS in accordance with claim 1, **characterised in that** the lamina body has folding lines.

3. TRAP FOR INSECTS in accordance with claim 2, **characterised in that** the lamina body has two folding lines.

4. TRAP FOR INSECTS in accordance with claim 2, **characterised in that** the folding lines are parallel to each other.

5. TRAP FOR INSECTS in accordance with claim 1, **characterised in that** the area covered with a material (4) with attracting and adhesive qualities, and the area covered with adhesive material (6) are on the same face of the lamina body.
